# EUROPÄISCHE PATENTSCHRIFT

(11) **EP 3 991 603 B1**
(45) Veröffentlichungstag und Bekanntmachung des Hinweises auf die Patenterteilung: **05.04.2023**
(21) Anmeldenummer: 21190142.6
(22) Anmeldetag: 06.08.2021
(51) Int. Cl.: A47C 3/12, A47C 5/00, B29C 70/42, D02G 3/04

(54) **VERFAHREN ZUR HERSTELLUNG EINER EINSTÜCKIGEN SITZSCHALE AUS EINER FASERVERBUNDMATTE ZUR VERWENDUNG IN EINEM SITZMÖBEL**
METHOD FOR MANUFACTURING A ONE-PIECE SEAT SHELL MADE OF A FIBRE COMPOSITE MAT FOR USE IN A SEAT
PROCÉDÉ DE FABRICATION D'UNE COQUE DE SIÈGE MONOBLOC À PARTIR D'UNE NATTE COMPOSITE FIBREUSE DESTINÉE À ÊTRE UTILISÉE DANS UN SIÈGE

(30) Priorität: 28.10.2020 DE 102020213545
(43) Veröffentlichungstag der Anmeldung: 04.05.2022
(73) Patentinhaber: Sedus Stoll AG, 79804 Dogern (DE)
(72) Erfinder: STENZEL, Thomas, 79809 Weilheim (DE); KAMMERL, Manuel, 79771 Rechberg (DE)
(74) Vertreter: Isarpatent

(56) Entgegenhaltungen:
- CA-A1- 2 843 059
- CN-A- 109 249 662
- DE-A1- 1 654 292
- US-A- 2 831 534

## Beschreibung

### GEBIET DER ERFINDUNG

Die vorliegende Erfindung betrifft ein Verfahren zur Herstellung einer einstückigen Sitzschale aus einer Faserverbundmatte zur Verwendung in einem Sitzmöbel.

### TECHNISCHER HINTERGRUND

In der Möbelbranche steigt in jüngerer Zeit die Nachfrage nach Produkten auf der Basis von Vlies, Filz und anderen Fasermaterialien. Allgemein kommen vermehrt Faserverbundwerkstoffe mit natürlichen und/oder synthetischen Fasern und geeigneten Bindemitteln zum Einsatz. Vielfach dient hierbei ein Kunststoff als Grundmaterial für die Fasern und/oder das Bindemittel, welcher unter Wärmeeinwirkung fließfähig wird und den Faserverbund damit unter Druck und Temperatur formbar macht. Typische Materialien umfassen insbesondere Polyester wie Polyethylenterephthalat (PET) oder Polylactid (PLA) oder dergleichen.

So beschreibt beispielsweise die Druckschrift DE 30 07 343 A1 ein Verfahren zur Herstellung von Formteilen aus Faservlies, bei welchem Fasern verwendet werden, die zumindest mantelseitig bindungswirksam schmelzbaren Werkstoff aufweisen. Vlies-Teilstücke werden unter Temperatureinwirkung formgepresst. Die Wärmebehandlung führt hierbei dabei dazu, dass Bindungsprozess und Formungsprozess gleichzeitig ablaufen.

Die Druckschrift EP 3 241 462 B1 beschreibt ein Möbel- und/oder Raumteilerstrukturelement mit zumindest einem raumseitigen Flächenelement, welches ganz oder teilweise als überwiegend glattflächiges Formvlies aus Kunststoff ausgebildet ist.

Die Druckschrift CN 109 249 662 A beschreibt das Formen von Sitzschalen aus PET-basierten Faserverbundmatten.

Die Druckschrift DE 16 54 292 A1 beschreibt ein schaumstoffgepolstertes Sitzmöbelstück, bei dem auf einem tragenden Unterteil aus tiefgezogener Kunststofffolie ein Oberteil aus kalthärtendem, formgeschäumten Weichschaumstoff über eine Klemm- oder Klebverbindung befestigt ist.

### ZUSAMMENFASSUNG DER ERFINDUNG

Vor diesem Hintergrund liegt der vorliegenden Erfindung die Aufgabe zugrunde, Sitzmöbel mit flexibler Flächengestaltung in möglichst einfacher Weise herzustellen.

Erfindungsgemäß wird diese Aufgabe durch ein Verfahren mit den Merkmalen des Patentanspruchs 1 gelöst.

Eine der vorliegenden Erfindung zugrunde liegende Idee besteht darin, die tragende Schale eines Sitzes vollständig aus einer einzigen Fasermatte zu fertigen, indem ein Formteil in einem einzelnen Arbeitshub eines Formwerkzeugs, d.h. in nur einem Fertigungsschritt, vollständig geformt wird. Hierbei wird ein Konturschnitt für das Formteil aus der Faserverbundmatte ausgestanzt und gleichzeitig in Form gepresst. Dabei werden unter anderem auch Rundungen und Kanten in demselben Verfahrensschritt mit ausgebildet.

Als materielle Grundlage für das Formteil dient hierbei eine einteilige Fasermatte mit einem Kunststoffanteil, der mittels Wärmebehandlung in einen verformbaren und/oder fließfähigen Zustand gebracht wird. Vor dem eigentlichen Pressvorgang kann die Faserverbundmatte geeignet zugeschnitten werden. Die Erwärmung des Materials kann dann sowohl vor dem eigentlichem Pressvorgang, z.B. durch einen Heißluftstrom in einem Ofen, als auch währenddessen stattfinden, z.B. durch Aufheizung des Formwerkzeugs. Durch das Zusammenspiel des erhitzten Kunststoffanteils und der Druckbeaufschlagung des Pressvorgangs wird ein Vernetzungs-, Verformungs- und/oder Verdichtungsprozess innerhalb der Faserverbundstruktur in Gang gesetzt, bei welchem sich das aufgeschmolzene Kunststoffmaterial zwischen den Fasern verteilt und diese dabei miteinander verklebt. Nach Abkühlung und dadurch bedingter Aushärtung des Kunststoffs bleibt ein ausgehärtetes Faserverbundformteil in der gewünschten Form zurück. Durch entsprechende Formgestaltung des Formwerkzeugs lassen sich praktisch beliebig gekrümmte Sitzschalen in einfacher Weise und mit hoher Durchsatzrate herstellen. Überschüssiges Material kann in Nachbearbeitungsschritten entfernt bzw. abgetrennt werden, z.B. mit einer Wasserschneidanlage. Dabei können Kanten, falls gewünscht bzw. erforderlich, sauber entgratet und gebürstet werden, um eine gewünschte Vlieshaptik zu erhalten.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Weiterbildung kann die Faserverbundmatte einen Vliesstoff und/oder einen Filzstoff aufweisen.

Ein Vliesstoff ist ein Gebilde aus Fasern beliebiger Länge, die auf irgendeine Weise zu einer Faserschicht zusammengefügt und miteinander verbunden worden sind. Als flexible textile Flächengebilde sind Vliesstoffe leicht biegsam und weisen eine vergleichsweise geringe Dicke gegenüber ihrer Länge und Breite auf. Ihre Hauptstrukturelemente sind hierbei Fasern, die aus unterschiedlichsten Materialien bestehen können. Vliesstoffe stellen eine Materialgruppe mit einer großen Eigenschaftsvielfalt dar, die durch die Vielzahl von nutzbaren Rohstoffen und Herstellungsvarianten einem breiten Spektrum von Anwendungsanforderungen gezielt angepasst werden kann.

Ein Filzstoff ist ursprünglich ein Faserwerkstoff aus einem Naturprodukt, insbesondere Schurwolle von Schafen. Allerdings ist es ebenso möglich, Filze aus Chemiefasern (Kunststoff) und Pflanzenfasern (z.B. Kokos oder Baumwolle) herzustellen. Filzstoffe werden mitunter basierend auf den verwendeten Fasermaterialien von Vliesstoffen abgegrenzt. Eine weitere häufige Unterscheidung wird darin getroffen, dass Filze nicht nur eine oberflächliche, sondern auch im Inneren eine weitgehende und gleichmäßige Verfestigung des Fasermaterials aufweisen. Eine Unterscheidung kann somit prinzipiell anhand der Dichte und/oder des Verfestigungsmechanismus vorgenommen werden. Jüngere Normen für die Definition von Vliesstoffen sehen jedoch keine explizite Trennung mehr zu den Filzen vor.

Gemäß einer Weiterbildung kann die Faserverbundmatte PET-basierte Fasern umfassen.

Polyethylenterephthalat (PET) ist ein durch Polykondensation hergestellter thermoplastischer Kunststoff aus der Familie der Polyester, d.h. ein glasklarer Kunststoff, der durch Schmelzen unter Luftabschluss zu Synthesefasern versponnen werden kann (Schmelzspinnverfahren). Da Polyester zu 100% recycelbar ist, besteht die Möglichkeit Vliesmöbel aus recyceltem Material herzustellen und diese nach ihrem Lebenszyklus auch wieder dem Recyclingkreislauf zuzuführen.

Gemäß einer Weiterbildung kann die Faserverbundmatte Bikompomonentenfasern umfassen. Die Bikompomonentenfasern können einen Polyesterkern aufweisen, der von einem Polymermantel mit einer Schmelztemperatur unterhalb der Umformtemperatur umgeben ist.

Im Gegensatz zu einer reinen PET-Faser weist eine Bikompomonentenfaser somit lediglich einen Kern aus Polyester auf. PET weist dabei beispielsweise einen Schmelzpunkt zwischen etwa 200°C bis 300°C auf. Der den Kern umschließende Fasermantel kann nun ein Polymer mit einer deutlich niedrigeren Schmelztemperatur aufweisen, z.B. ein niedrig schmelzendes Polymer, welches bereits unter 150°C schmilzt, z.B. 130°C oder weniger. Bei einer entsprechenden Wärmebehandlung einer Faserverbundmatte aus solchen Fasern kann somit lediglich der Mantel der Fasern aufgeschmolzen werden und als Vernetzungsbasis für die Bildung des Formteils dienen. Die Faserkerne können dagegen zumindest weitestgehend ihre feste Struktur behalten und als versteifendes Grundmaterial für das Formteil dienen.

Der Druck, welcher beim Pressen eingesetzt wird, entscheidet über die Dicke und Verdichtung des Formteils. Dabei verschmilzt bzw. verschweißt der niedrigschmelzende Anteil der Bikomponentenfasern mit dem Polyesteranteil der Fasern. Je stärker die Vernetzung der Fasern, desto geringer ist die Vlieshaptik der entstehenden Oberfläche. Gleichzeitig weist diese jedoch eine höhere Stabilität auf. Dabei hängt der Grad der Vernetzung ebenso von dem konkreten Pressvorgang ab. Bei größerer Verdichtung wird eine stärkere Vernetzung erzielt, da sich das aufgeschmolzene Material stärker verteilt.

Es versteht sich hierbei, dass eine verwendete Faserverbundmatte unterschiedliche Fasertypen aufweisen kann, z.B. einen ersten Fasertyp aus einer reinen PET-Faser und einen zweiten Fasertyp aus einem niedrigschmelzen Kunststoff bzw. mit einem Anteil aus einem derartigen Material. Weiterhin kann eine solche Faserverbundmatte einen Kunststoffanteil aufweisen, der nicht in Faserform vorliegt, sondern die Fasern der Matte beispielsweise als Bindematerial bzw. Matrixmaterial umgibt bzw. durchsetzt. Dieser bindende Kunststoffanteil kann beispielsweise in einem vorhergehenden Fertigungsschritt bereits aufgeschmolzen und mit den Fasern der Matte vernetzt worden sein.

Gemäß einer Weiterbildung kann während des Arbeitshubs in dem Formteil eine Versteifungsstruktur zur Versteifung der Sitzschale und/oder eine Montagestruktur zur Montage der Sitzschale an dem Sitzmöbel ausgeformt werden.

Beispielsweise können durch geeignete Verdichtung und Verformung der Faserverbundmatte ein oder mehrere versteifende Bereiche in dem Formteil erzeugt werden. In einem konkreten Beispiel kann eine regelmäßige Struktur aus Versteifungsrippen oder dergleichen in das Formteil eingearbeitet werden, bei der Bereiche mit höherer Dichte des Fasermaterials auf Bereiche mit niedrigerer Dichte in regelmäßigen Abständen folgen. In einem anderen konkreten Beispiel können alleinstehende Strukturen mit höherer Dichte in besonders beanspruchte oder belastete Bereiche der Sitzschale eingearbeitet werden.

Entsprechend können bestimmte Bereiche des Formteils geeignet geformt und verstärkt bzw. verdichtet werden, um beispielsweise Anbindungsbereiche für die Montage von Komponenten an der Sitzschale und/oder für die Befestigung der Sitzschale an einem Sitzmöbel bereitzustellen.

Gemäß einer Weiterbildung kann eine Montagestruktur als randseitiger Umschlag in dem Formteil ausgeformt werden.

Diese Weiterbildung bietet somit eine konkrete Variante für die Ausbildung der Struktur und Form der Sitzschale als Befestigungsbereich. Unter einem Umschlag wird hierbei die Doppelung eines Randes der Faserverbundmatte durch Verbiegen verstanden (es liegt somit ein Falz in der zugrundeliegenden Faserverbundmatte vor). Der Umschlag dient dabei einerseits einer Erhöhung der Steifigkeit des Formteils. Andererseits kann die Sitzschale an dem Umschlag beispielsweise auf eine Strebe oder Kante eines Sitzgestells gesteckt und derart an dieser montiert werden. Durch geeignete Ausbildung des Umschlags kann dabei ein Form- oder Kraftschluss erzeugt werden. Beispielsweise kann der Umschlag die Strebe oder Kante des Sitzgestells mit einer Anpresskraft gewissermaßen umklammern. Darüber hinaus entsteht durch den Umschlag eine gerundete Kante für die Sitzschale, wodurch eine angenehme Haptik und ein ästhetisch ansprechender Abschluss der Sitzschale geschaffen werden. Es versteht sich hierbei natürlich, dass zusätzlich auch ergänzende Befestigungsmittel zum Einsatz kommen können.

Erfindungsgemäß umfasst das Verfahren weiterhin Fügen eines Montageelements an das Formteil zur Montage der Sitzschale an dem Sitzmöbel.

Alternativ oder zusätzlich zu einer Montagestruktur, welche in das Faserverbundmaterial als solches eingearbeitet ist, können ein oder mehrere Montageelemente an das Formteil angeformt bzw. angefügt werden. Derartige Montageelemente umfassen beispielsweise Halter, Klammern, Verbindungselemente, z.B. Winkelelemente, usw. Beispielsweise können derartige Einzelteile lösbar oder unlösbar mit dem Formteil verbunden werden. Besonders geeignete Fügeverfahren für Fasermaterialen bzw. Vliesstoffe umfassen hierbei Kleben und Schweißen, welche beide zu den stoffschlüssigen Fügeverfahren gehören. Als Schweißtechnik kommt neben dem klassischen thermischen Verschweißen, also der direkten Einwirkung mit Druck und Temperatur, insbesondere das Ultraschallschweißen in Betracht. Bei derartigen Schweißverfahren kann das Kunststoffmaterial oder zumindest ein Kunststoffbestandteil des Formteils aufgeschmolzen werden und mit einem entsprechenden Bestandteil des Montageelements stoffschlüssig verbunden werden.

Gemäß einer Weiterbildung kann das Montageelement aus dem gleichen Material wie die Faserverbundmatte gefertigt sein.

Damit kann die Sitzschale in ihrer Gesamtheit einschließlich der Montage- bzw. Verbindungselemente aus demselben Vliesstoff bzw. Filzstoff gebildet werden.

Gemäß einer Weiterbildung kann das Montageelement gemeinsam mit dem Formteil in dem Arbeitshub des Formwerkzeugs aus derselben Faserverbundmatte gestanzt und in Form gepresst werden.

In dieser besonders einfachen und zeiteffizienten Weiterbildung des Verfahrens dient somit eine einzelne Faserverbundmatte als Ausgangsmaterial für die Sitzschale samt Montageelementen. Hierbei können die einzelnen Komponenten aus unterschiedlichen Bereichen der Faserverbundmatte konturgestanzt werden. Prinzipiell ist es hierzu ausreichend, wenn das Formwerkzeug einen Konturschnitt für die Komponenten in die Faserverbundmatte einstanzt. Anschließend können die Komponenten in einem separaten Verfahrensschritt aus der Faserverbundmatte entlang der vorgezeichneten Konturen ausgeschnitten werden. Nichtsdestotrotz können die Komponenten jedoch bereits während des Pressvorgangs ihre finale Form bzw. Gestalt erhalten. Prinzipiell ist es jedoch ebenso möglich, die Montageelemente und/oder das Formteil nachträglich ergänzend zu bearbeiten, bevor diese aneinander gefügt werden.

Erfindungsgemäß wird das Montageelement im Anschluss an das Pressen durch Ultraschallschweißen stoffschlüssig an das Formteil gefügt.

Ultraschallschweißen ist insbesondere für thermoplastische Kunststoffe wie PET geeignet. Bei dieser Schweißtechnik wird mit Hilfe eines Generators ein hochfrequenter Wechselstrom erzeugt und zu einem Ultraschallwandler, dem sogenannten Konverter, übertragen, der daraus mit Hilfe des piezoelektrischen oder des magnetostriktiven Effekts eine mechanische Ultraschallschwingung erzeugt. Diese Schwingungen werden über ein Amplitudentransformationsstück auf eine Sonotrode übertragen, welche die Verbindung von dem Ultraschallgenerator zu dem Werkstück herstellt und die Ultraschallschwingung an die Bearbeitungsaufgabe anpasst. Sonotroden werden gewöhnlich aus Aluminium, Titan oder Stahl gefertigt, ihre Geometrie ist abhängig von der durch den eingesetzten Generator bereitgestellten Frequenz und von der Bearbeitungsaufgabe.

Mit Hilfe der Ultraschallschwingung wird das Werkstück an der gewünschten Stelle aufgrund der Reibung örtlich erhitzt und dadurch das zugrundliegende Kunststoffmaterial verflüssigt. Dabei bietet diese Schweißtechnik eine kostengünstige Lösung, um schnell dauerhafte Verbindungen mit hoher Endfestigkeit zu schaffen.

Gemäß einer Weiterbildung kann das Montageelement als Winkelelement geformt werden.

Beispielsweise kann ein derartiges Winkelelement einfach als rechteckige Fläche aus der Faserverbundmatte mit ausgestanzt und bereits in dem Pressvorgang mit einem mittigen Falz versehen werden. Anschließend kann einer der beiden Arme des Winkelelements mit dem Formteil verschweißt und/oder verklebt werden. Der andere Arm kann dann an einem Sitzmöbel, z.B. einer Strebe eines Sitzgestells, montiert werden.

Gemäß einer Weiterbildung kann ein Einlageteil in dem Arbeitshub mit der Faserverbundmatte verpresst werden.

Das Einlageteil kann beispielsweise als Versteifung und/oder als Montagestruktur für die Sitzschale dienen. Beispielsweise kann ein Kunststoffbauteil in das verflüssigte oder zumindest weiche Plastikmaterial der Faserverbundmatte eingepresst werden. Nach Abkühlung und Aushärtung kann eine stoffschlüssige Verbindung zwischen den beiden Komponenten verbleiben. In einem konkreten Beispiel kann ein Kunststoffbauteil mit dem Vliesmaterial verpresst werden, um dieses bereichsweise zu verstärken. In einem anderen konkreten Beispiel kann ein Halter, eine Klammer, ein Verbindungsstück oder dergleichen fest mit dem Formteil verbunden werden.

Gemäß einer Weiterbildung kann das Einlageteil eine Vielzahl von Befestigungshaken an einer Befestigungsfläche aufweisen, an welcher das Einlageteil mit der Faserverbundmatte verpresst wird.

Die Befestigungshaken können hierbei in das weiche Kunststoffmaterial des Formteils eindringen, sodass das Einlageteil nach Aushärtung der Sitzschale unlösbar mit dieser verbunden ist. Dabei können die Befestigungshaken an den Fasern der Faserverbundmatte angreifen und mit diesen verhaken.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Perspektivansicht einer nicht erfindungsgemäßen Sitzschale eines Sitzmöbels von schräg vorne;
- Fig. 2: die nicht erfindungsgemäße Sitzschale aus Fig. 1 in einer Seitenansicht;
- Fig. 3: ein schematisches Ablaufdiagramm eines Verfahrens zur Herstellung der Sitzschale aus Fig. 1 und 2 gemäß einer Ausführungsform der Erfindung;
- Fig. 4: die nicht erfindungsgemäße Sitzschale aus Fig. 1 und 2 in einer perspektivischen Rückansicht;
- Fig. 5: eine schematische Perspektivansicht eines nicht erfindungsgemäßen Sitzgestells von schräg vorne für das nicht erfindungsgemäße Sitzmöbel mit der nicht erfindungsgemäßen Sitzschale aus Fig. 1;
- Fig. 6: eine schematische Draufsicht auf eine nicht erfindungsgemäße Faserverbundmatte, welche in dem erfindungsgemäßen Verfahren aus Fig. 3 verwendet wird; und
- Fig. 7: eine schematische Schnittansicht eines Formwerkzeugs, welches in dem erfindungsgemäßen Verfahren aus Fig. 3 verwendet wird.

Die beiliegenden Figuren der Zeichnung sollen ein weiteres Verständnis der Erfindung vermitteln.

Die Elemente der Zeichnungen sind nicht notwendigerweise maßstabsgetreu zueinander gezeigt. In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

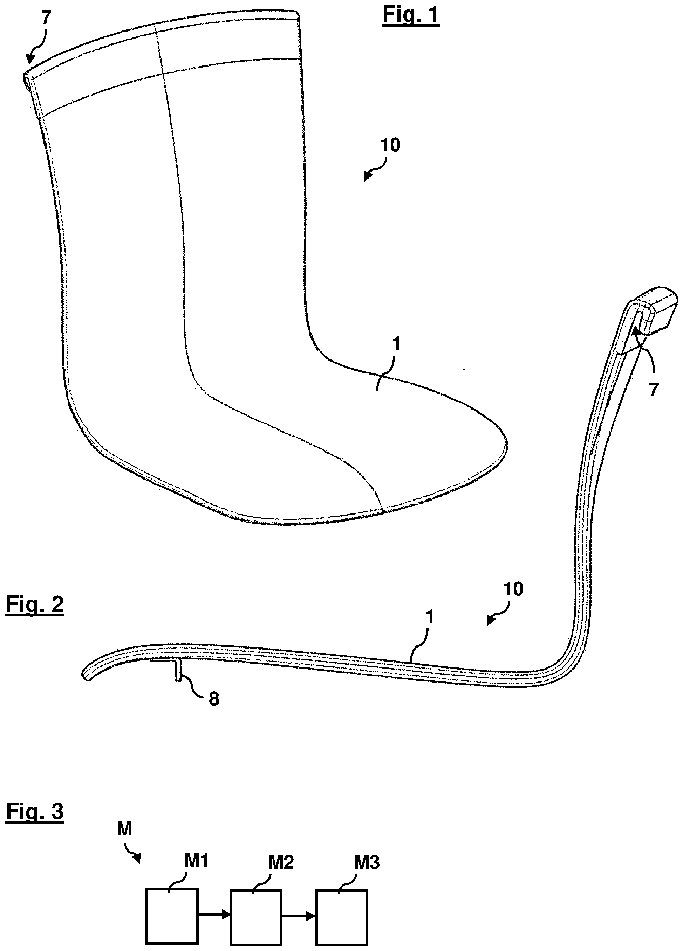

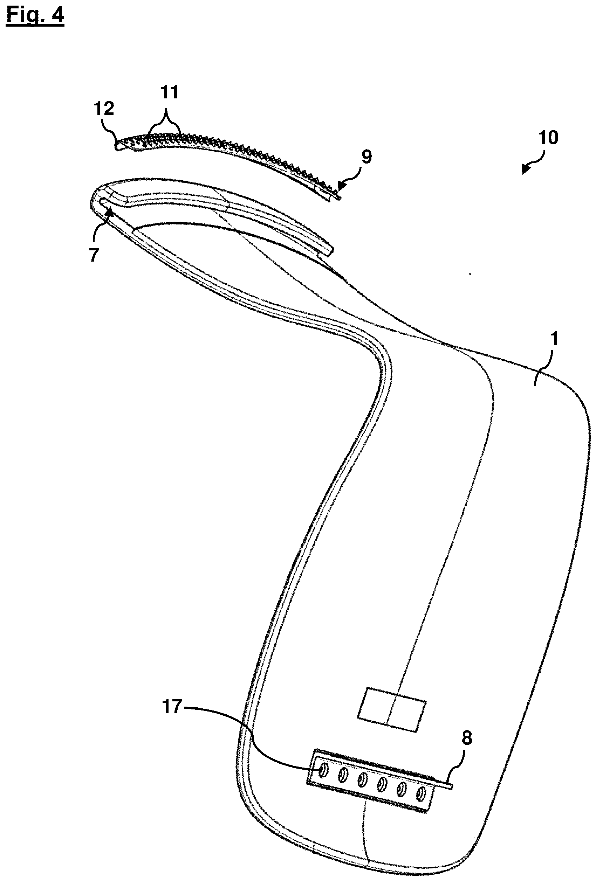

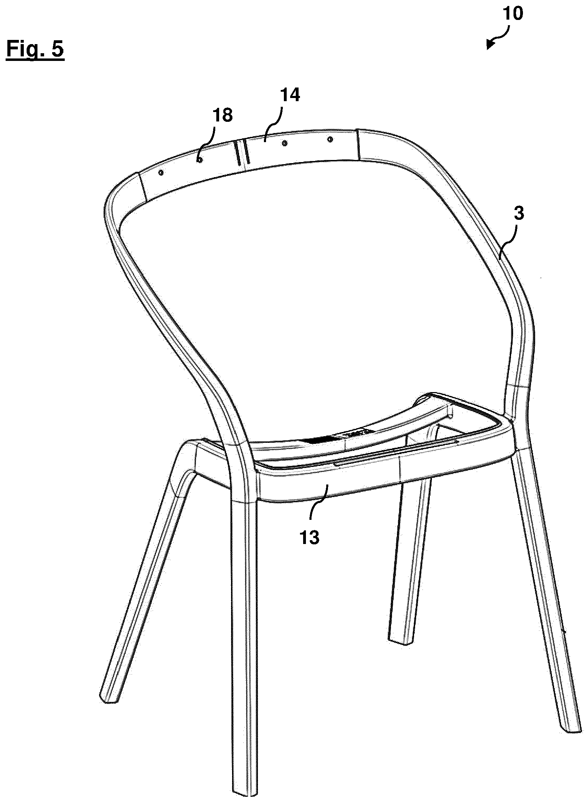

Figur 1 zeigt eine schematische Perspektivansicht einer einstückigen Sitzschale 1 eines Sitzmöbels 10 von schräg vorne. Die Sitzschale 1 ist ebenfalls in Fig. 2 und 4 in anderen Ansichten dargestellt. Fig. 5 zeigt ein dazu gehöriges Sitzgestell 3 des Sitzmöbels 10, an welchem die Sitzschale 1 befestigt werden kann.

Die Sitzschale 1 wird hierbei aus einer einzigen Faserverbundmatte 2 aus Vliesstoff in einem einzelnen Fertigungsschritt in Form gepresst. Das Sitzgestell 3 hingegen kann andererseits in herkömmlicher Weise aus Kunststoff oder einem anderen Material gefertigt sein. Beispielsweise kann das Gestell 3 aus einem Stück bestehen und aus einem Polyamid mit einem Glasfaserzusatz hergestellt sein.

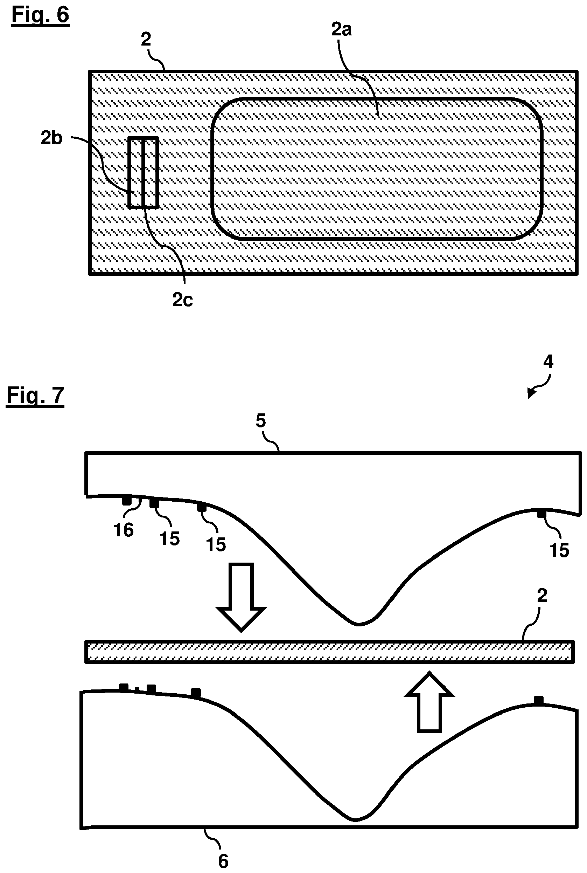

Das zugehörige Verfahren M für die Fertigung der Sitzschale 1 aus Vliesstoff ist schematisch als Ablaufdiagramm in Fig. 3 zu sehen. Eine beispielhafte Faserverbundmatte 2, wie sie in dem Verfahren M eingesetzt wird, ist in Fig. 6 zu sehen.

Fig. 7 zeigt schließlich ein Formwerkzeug 4, wie es für das Verfahren M eingesetzt werden kann.

Das Verfahren M umfasst dabei unter M1 Erhitzen der Faserverbundmatte 2 auf eine Umformtemperatur und unter M2 Pressen der erhitzten Faserverbundmatte 2 in einem einzelnen Arbeitshub des Formwerkzeugs 4 zu einem flächigen Formteil, welches entsprechend einer Gestalt der Sitzschale 1 gekrümmt ist. Der Schritt des Erhitzens kann hierbei dem Pressvorgang vorgeschaltet durchgeführt werden, indem die Faserverbundmatte 2 beispielsweise in einen Schubladenofen eingelegt und auf oder über die Umformtemperatur aufgeheizt wird. Zuvor kann die Faserverbundmatte 2 bereits zugeschnitten worden sein.

Der Ofen kann beispielsweise auf eine Temperatur von 180°C gebracht werden, was bei einer Schmelztemperatur des Kunststoffs von 130° eine oder mehrere Minuten Zeit für den Press- und Umformprozess lässt, bevor die Schmelztemperatur wieder unterschritten wird und das Bauteil aushärtet und damit nicht weiter verformbar ist. Durch das Erhitzen kann das Vliesmaterial einen Volumenschrumpf von einigen Prozent erfahren, was in der Formgebung zu berücksichtigen ist. Der formgebende Vorgang in dem Formwerkzeug 4 kann dann mehrere Minuten dauern. Im Anschluss kann das Formteil entnommen werden. Alternativ oder zusätzlich ist es denkbar, das Formwerkzeug 4 zu erhitzen, um den Umformprozess zu unterstützten oder überhaupt erst zu ermöglichen.

Wie bereits weiter oben erwähnt wurde, handelt es sich bei der Faserverbundmatte 2 um eine einstückige Faservliesmatte, d.h. um ein flexibles textiles Flächengebilde aus wirren und unregelmäßig verschlungenen, d.h. ungeordneten, Fasern. Hierbei kann es sich insbesondere um eine Filzmatte handeln. Als Fasern kommen in dieser konkreten Anwendung sowohl einfache Fasern aus PET, als auch Bikomponentenfasern zum Einsatz, die jeweils einen Polyesterkern aufweisen, der von einem Mantel aus einem niedrigschmelzenden Polymer umschlossen ist.

Es versteht sich hierbei, dass in anderen Ausführungen ebenso andere Fasertypen zum Einsatz kommen können. Dabei können Fasern mit unterschiedlichen Kunststoffzusammensetzungen ebenso eingesetzt werden wie Fasern aus tierischen (z.B. Wolle), pflanzlichen (z.B. Kokos, Hanf usw.) oder anderen Materialien (Glas, Kohlenstoff etc.). Dabei können die jeweils verwendeten Fasern in einen Kunststoff oder ein anderes Matrixmaterial eingebettet sein und/oder von diesem gebunden werden.

In dem vorliegenden Beispiel umfassen die Bikomponentenfasern mantelseitig einen Kunststoffbestandteil, welcher eine Schmelztemperatur unterhalb der Umformtemperatur aufweist, z.B. 130°C. Aufgrund der Wärmebehandlung wird dieser Kunststoffbestandteil aufgeweicht bzw. verflüssigt und dadurch fließfähig. Der Kern der Bikomponentenfasern und die einfachen PET-Fasern können bei geeigneter Wahl der Umformtemperatur jedoch in ihrem festen Zustand verbleiben. Aufgrund des Anpressdrucks in dem Formwerkzeug verteilt sich der geschmolzene Kunststoff in der Faserstruktur der Faserverbundmatte 2, was letztendlich zu einer mehr oder weniger starken Vernetzung innerhalb der Faserverbundmatte 2 führt. Hierbei verschmilzt der niedrigschmelzende Anteil der Bikomponentenfaser mit den einfachen PET-Fasern.

Für die Formgebung des Fasermaterials umfasst das Formwerkzeug 4 eine Presse, welche eine (konvexe) Matrize 5 und eine dazu komplementäre (konkave) Patrize 6 aufweist, die im Zusammenspiel eine Negativform der gewünschten Endform bilden (vgl. Fig. 7). Das Formteil wird von dem Formwerkzeug 4 in dem einen Arbeitshub aus der Faserverbundmatte 2 konturgestanzt und gleichzeitig in Form gepresst. Für die Konturzeichnung umfassen Matrize 5 und Patrize 6 unterschiedliche stegartige Erhöhungen bzw. Wölbungen. Mit derartigen Strukturen lassen sich zudem Vertiefungen, Falze und ähnliche funktionale Aspekte in der Struktur des Formteils erzeugen.

Beispielhaft hierfür sind in Fig. 7 mehrere Konturstege 15 eingezeichnet, die mehrere Stanzbereiche 2a, 2b in der Faserverbundmatte 2 vorgeben (vgl. Fig. 6). Aus dem ersten Stanzbereich 2a wird bei dem Pressvorgang das Formteil für die Sitzschale 1 geformt. Aus dem zweiten Stanzbereich 2b wird ein Montageelement 8 für die Sitzschale 1 geformt, welches in einem separaten Verfahrensschritt (s.u.) mit dem Formteil verbunden wird. Sofern dies nicht bereits während des Pressvorgangs geschieht, können beide Stanzbereiche 2a, 2b direkt im Anschluss an den Pressvorgang mit einem geeigneten Verfahren ausgeschnitten werden, wobei überschüssiges Material der Faserverbundmatte 2 entfernt wird.

Während des Arbeitshubs kann in dem Formteil vorliegend zudem eine Versteifungsstruktur 7 zur Versteifung der Sitzschale 1 und/oder eine Montagestruktur 7 zur Montage der Sitzschale 1 an dem Sitzmöbel 10 ausgeformt werden. In der beispielhaften Ausführung der Fig. 1, 2 und 4 ist beispielhaft hierfür ein Umschlag als Struktur 7 randseitig in dem Formteil ausgeformt. Der Bereich der Sitzschale 1 mit dem Umschlag dient hierbei als Rückenlehne und ist an dem Umschlag auf eine Rückenstrebe 14 des Sitzgestells 3 aufgesteckt.

In dem Umschlag ist mit dem Formteil zudem zwecks Verstärkung ein Einlageteil 9 aus Kunststoff während des Arbeitshubs verpresst worden (vgl. Fig. 4). Zur sicheren und dauerhaften Fügung an das Formteil weist das Einlageteil 9 eine Vielzahl von Befestigungshaken 11 an einer Befestigungsfläche 12 aufweist, an welcher das Einlageteil 9 mit der Faserverbundmatte 2 verpresst ist. Das Einlageteil 9 und die Montagestruktur 7 sowie das Sitzgestell 3 können entsprechende Montageöffnungen 18 bzw. Montagemittel aufweisen, über welche die Sitzschale 1 mit dem Sitzgestell 3 montiert werden kann.

Wieder bezugnehmend auf Fig. 3 umfasst das Verfahren M unter M3 weiterhin Fügen eines Montageelements 8 an das Formteil zur Montage der Sitzschale 1 an dem Sitzmöbel 10. Rein beispielhaft ist das Montageelement 8 vorliegend als Winkelelement ausgebildet (vgl. hierzu auch Fig. 2 und 3). An einer Montagefläche ist das Montageelement 8 stoffschlüssig an das Formteil gefügt worden.

Erfindungsgemäß ist das Montageelement 8 mittels Ultraschallschweißen insbesondere über eine Sonotrode festgeschweißt worden. Beispielhaft sind in Fig. 4 mehrere Schweißpunkte 17 eingezeichnet.

Um den Fertigungsprozess besonders praktisch zu gestalten, wird das Montageelement 8 aus dem gleichen Material wie die Faserverbundmatte 2 gefertigt. Hierzu wird das Montageelement 8 gemeinsam mit dem Formteil in dem Arbeitshub des Formwerkzeugs 4 aus derselben Faserverbundmatte 2 gestanzt und in Form gepresst. Wie Fig. 6 entnommen werden kann, ist hierzu ein zweiter Stanzbereich 2b in der Faserverbundmatte 2 vorgesehen, aus dem das Montageelement 8 ausgestanzt wird. Dabei erzeugt ein Falzsteg 16 des Formwerkzeugs 4 einen Falz in dem Montageelement 8 und unterteilt dieses somit in zwei rechtwinklige Befestigungsbereiche für das Winkelelement.

Damit die Sitzschale 1 auf dem Sitzgestell 3 nicht nach vorne oder hinten bezogen auf eine horizontalen Sitzfläche verrutschen kann, kann die Sitzschale 1 über das Montageelement 8 an dem Sitzgestell 3 fixiert werden, z.B. an einer horizontalen Querstrebe 13 des Sitzgestells 3. Da das Montageelement 8 dabei unterhalb der Sitzschale 1 angebracht ist und sich somit außerhalb des Sichtfelds eines Betrachters befindet, können Fügeverfahren wie Ultraschallschweißen zum Einsatz kommen, welche sichtbare Fügestellen hinterlassen (Schweißstellen).

Im Ergebnis wird somit eine Sitzschale 1 für ein Sitzmöbel 10 aus einer einzigen Fasermatte 2 aus einem Vlies- und/oder Filzstoff als Formvlies gefertigt. Montageelemente 8 werden in vorteilhafterweise ebenfalls aus dieser Fasermatte 2 im Zuge desselben Fertigungsschritts gestanzt und anschließend stoffschlüssig mit der Sitzschale 1 verbunden. Zudem können Versteifungsstrukturen und/oder Montagestrukturen direkt mit in die Faserstruktur der Sitzschale 1 hineingeformt werden. Einlageteile 9 aus Kunststoff können die Sitzschale 1 strukturell und funktional ergänzen.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Sitzschale
- 2: Faserverbundmatte
- 2a, 2b: Stanzbereiche
- 2c: Falzbereich
- 3: Sitzgestell
- 4: Formwerkzeug
- 5: Matrize
- 6: Patrize
- 7: Versteifungsstruktur/Montagestruktur
- 8: Montageelement
- 9: Einlageteil
- 10: Sitzmöbel
- 11: Befestigungshaken
- 12: Befestigungsfläche
- 13, 14: Strebe
- 15: Kontursteg
- 16: Falzsteg
- 17: Schweißpunkt
- 18: Montageöffnung
- M: Verfahren
- M1-M3: Verfahrensschritte

## Patentansprüche

1. Verfahren (M) zur Herstellung einer einstückigen Sitzschale (1) aus einer Faserverbundmatte (2) zur Verwendung in einem Sitzmöbel (10), umfassend:
Erhitzen (M1) der Faserverbundmatte (2) auf eine Umformtemperatur, und
Pressen (M2) der erhitzten Faserverbundmatte (2) in einem einzelnen Arbeitshub eines Formwerkzeugs (4) zu einem flächigen Formteil, welches entsprechend einer Gestalt der Sitzschale (1) gekrümmt ist,
Fügen (M3) eines Montageelements (8) an das Formteil zur Montage der Sitzschale (1) an dem Sitzmöbel (10),
wobei das Formteil in dem Arbeitshub aus der Faserverbundmatte (2) konturgestanzt und in Form gepresst wird,
wobei die Faserverbundmatte (2) als ein einstückiges flexibles textiles Flächengebilde mit einem Kunststoffbestandteil ausgebildet ist, welcher eine Schmelztemperatur unterhalb der Umformtemperatur aufweist, und
**dadurch gekennzeichnet, dass**
das Montageelement (8) im Anschluss an das Pressen durch Ultraschallschweißen stoffschlüssig an das Formteil gefügt wird.

2. Verfahren nach Anspruch 1,
**dadurch gekennzeichnet,**
**dass** die Faserverbundmatte (2) einen Vliesstoff und/oder einen Filzstoff aufweist.

3. Verfahren nach Anspruch 1 oder 2,
**dadurch gekennzeichnet,**
**dass** die Faserverbundmatte (2) PET-basierte Fasern umfasst.

4. Verfahren nach einem der Ansprüche 1 bis 3,
**dadurch gekennzeichnet,**
**dass** die Faserverbundmatte (2) Bikompomonentenfasern umfasst, welche einen Polyesterkern aufweisen, der von einem Polymermantel mit einer Schmelztemperatur unterhalb der Umformtemperatur umgeben ist.

5. Verfahren nach einem der Ansprüche 1 bis 4,
**dadurch gekennzeichnet,**
**dass** während des Arbeitshubs in dem Formteil eine Versteifungsstruktur (7) zur Versteifung der Sitzschale (1) und/oder eine Montagestruktur (7) zur Montage der Sitzschale (1) an dem Sitzmöbel (10) ausgeformt wird.

6. Verfahren nach Anspruch 5,
**dadurch gekennzeichnet,**
**dass** eine Montagestruktur (7) als randseitiger Umschlag in dem Formteil ausgeformt wird.

7. Verfahren nach einem der Ansprüche 1 bis 6,
**dadurch gekennzeichnet,**
**dass** das Montageelement (8) aus dem gleichen Material wie die Faserverbundmatte (2) gefertigt ist, wobei das Montageelement (8) vorzugsweise gemeinsam mit dem Formteil in dem Arbeitshub des Formwerkzeugs (4) aus derselben Faserverbundmatte (2) gestanzt und in Form gepresst wird.

8. Verfahren nach einem der Ansprüche 1 bis 7,
**dadurch gekennzeichnet,**
**dass** das Montageelement (8) als Winkelelement geformt wird.

9. Verfahren nach einem der Ansprüche 1 bis 8,
**dadurch gekennzeichnet,**
**dass** ein Einlageteil (9) in dem Arbeitshub mit der Faserverbundmatte (2) verpresst wird , wobei das Einlageteil (9) vorzugsweise eine Vielzahl von Befestigungshaken (11) an einer Befestigungsfläche (12) aufweist, an welcher das Einlageteil (9) mit der Faserverbundmatte (2) verpresst wird.

## Claims

1. Method (M) for producing a one-piece seat shell (1) from a fibre composite mat (2) for use in a seat (10), comprising:
heating (M1) the fibre composite mat (2) to a shaping temperature,
pressing (M2) the heated fibre composite mat (2), in a single working pass of a shaping tool (4), into a planar shaped part curved in accordance with a formation of the seat shell (1), and
joining (M3) a mounting element (8) to the shaped part to mount the seat shell (1) on the seat (10),
the shaped part being contour-die-cut from the fibre composite mat (2) and pressed into shape in the working pass,
the fibre composite mat (2) being formed as a one-piece, flexible, planar textile formation comprising a plastics material component having a melting point below the shaping temperature, and
**characterised in that**,
following the pressing, the mounting element (8) is joined to the shaped part in a material connection by ultrasound welding.

2. Method according to claim 1,
**characterised**
**in that** the fibre composite mat (2) comprises a non-woven and/or a felt cloth.

3. Method according to either claim 1 or claim 2,
**characterised**
**in that** the fibre composite mat (2) comprises PET-based fibres.

4. Method according to any of claims 1 to 3,
**characterised**
**in that** the fibre composite mat (2) comprises bicomponent fibres having a polyester core enclosed by a polymer casing having a melting point below the shaping temperature.

5. Method according to any of claims 1 to 4,
**characterised**
**in that**, during the working pass, a reinforcing structure (7) for reinforcing the seat shell (1) and/or a mounting structure (7) for mounting the seat shell (1) on the seat (10) are formed in the shaped part.

6. Method according to claim 5,
**characterised**
**in that** a mounting structure (7) is formed in the shaped part as an edge cuff.

7. Method according to any of claims 1 to 6,
**characterised**
**in that** the mounting element (8) is produced from the same material as the fibre composite mat (2), the mounting element (8) preferably being die-cut from the same fibre composite mat (2) and pressed into shape together with the shaped part in the working pass of the shaping tool (4).

8. Method according to any of claims 1 to 7,
**characterised**
**in that** the mounting element (8) is formed as an elbow element.

9. Method according to any of claims 1 to 8,
**characterised**
**in that** an inlay part (9) is compacted with the fibre composite mat (2) in the working pass, the inlay part (9) preferably having a plurality of fastening hooks (11) on a fastening face (12) on which the inlay part (9) is compacted with the fibre composite mat (2).

## Revendications

1. Procédé (M) de fabrication d'une coque de siège d'une seule pièce (1) à partir d'une natte en composite de fibres (2), destinée à être utilisé dans un meuble d'assise (10), comprenant de :
chauffer (M1) la natte en composite de fibres (2) à une température de formage, et
presser (M2) la natte en composite de fibres chauffée (2) en une seule course de travail d'un outil de formage (4) pour obtenir une pièce formée plate qui est courbée en fonction d'une forme de la coque de siège (1),
assembler (M3) un élément de montage (8) à la pièce formée pour le montage de la coque de siège (1) sur le meuble d'assise (10),
dans lequel la pièce formée est, dans la course de travail, découpée en contour à partir de la natte en composite de fibres (2) et pressée en forme,
dans lequel la natte en composite de fibres (2) est réalisée sous la forme d'un produit textile plat flexible d'une seule pièce avec une composante en matière plastique qui présente une température de fusion inférieure à la température de formage, et
**caractérisé en ce que**
l'élément de montage (8) est assemblé à la pièce formée par liaison de matière par soudage par ultrasons à la suite du pressage.

2. Procédé selon la revendication 1,
**caractérisé en ce**
**que** la natte en composite de fibres (2) présente un tissu non tissé et/ou un tissu feutré.

3. Procédé selon la revendication 1 ou 2,
**caractérisé en ce**
**que** la natte en composite de fibres (2) comprend des fibres à base de PET.

4. Procédé selon l'une des revendications 1 à 3,
**caractérisé en ce**
**que** la natte en composite de fibres (2) comprend des fibres bicomposantes présentant une âme en polyester entourée d'une gaine en polymère ayant une température de fusion inférieure à la température de formage.

5. Procédé selon l'une des revendications 1 à 4,
**caractérisé en ce**
**que**, pendant la course de travail, on forme dans la pièce formée une structure de rigidification (7) pour rigidifier la coque de siège (1) et/ou une structure de montage (7) pour monter la coque de siège (1) sur le meuble d'assise (10) .

6. Procédé selon la revendication 5,
**caractérisé en ce**
**qu'**une structure de montage (7) est formée dans la pièce formée sous la forme d'un rabat au niveau du bord.

7. Procédé selon l'une des revendications 1 à 6,
**caractérisé en ce**
**que** l'élément de montage (8) est fabriqué dans le même matériau que la natte en composite de fibres (2), l'élément de montage (8) étant de préférence découpé et pressé en forme avec la pièce formée à partir de la même natte en composite de fibres (2) dans la course de travail de l'outil de formage (4).

8. Procédé selon l'une des revendications 1 à 7,
**caractérisé en ce**
**que** l'élément de montage (8) est formé comme un élément angulaire.

9. Procédé selon l'une des revendications 1 à 8,
**caractérisé en ce**
**qu'**une pièce d'insertion (9) est pressée avec la natte en composite de fibres (2) dans la course de travail, la pièce d'insertion (9) présentant de préférence une pluralité de crochets de fixation (11) sur une surface de fixation (12) sur laquelle la pièce d'insertion (9) est pressée avec la natte en composite de fibres (2).
